Europäisches Patentamt

European Patent Office

Office européen des brevets

(11) Veröffentlichungsnummer: **0 271 025 B1**

(12) **EUROPÄISCHE PATENTSCHRIFT**

(45) Veröffentlichungstag der Patentschrift: **11.11.92**

(21) Anmeldenummer: **87117980.0**

(22) Anmeldetag: **04.12.87**

(51) Int. Cl.⁵: **G02B 6/38**, G02B 6/40

(54) **Verbindungselement für Lichtwellenleiter.**

(30) Priorität: **08.12.86 DE 3641838**

(43) Veröffentlichungstag der Anmeldung:
**15.06.88 Patentblatt 88/24**

(45) Bekanntmachung des Hinweises auf die
Patenterteilung:
**11.11.92 Patentblatt 92/46**

(84) Benannte Vertragsstaaten:
**AT BE CH DE FR GB IT LI NL SE**

(56) Entgegenhaltungen:
**WO-A-86/02172**
**DE-A- 3 316 727**
**DE-A- 3 408 783**
**DE-B- 1 183 226**

**PATENT ABSTRACTS OF JAPAN, Band 3, nr.
94 (E-129), 10. August 1979; & JP A 54073061**

(73) Patentinhaber: **SIEMENS AKTIENGESELL-
SCHAFT**
**Wittelsbacherplatz 2**
**W-8000 München 2(DE)**

(72) Erfinder: **Finzel, Lothar, Dipl.-Ing.**
**Forstenrieder Allee 4**
**W-8000 München 71(DE)**

## Beschreibung

Die Erfindung betrifft ein Verbindungselement für mehrere Lichtleitfasern mit Umhüllung bestehend aus zwei fluchtend angeordneten Trägerkörpern, die jeweils mehrere quer zu ihrer Trennstelle parallel verlaufende V-förmige Zentrierrillen zur Aufnahme einzelner entmantelter Lichtleitfasern und beiderseits der Zentrierrillen jeweils Führungsnuten aufweisen, in denen entsprechend angepaßte, beide Trägerkörper überdeckende Profilleisten von Führungsschienen eingreifen.

Ein Verbindungselement dieser Art ist aus der deutschen Offenlegungsschrift DE 34 08 783 bekannt. Um eine genau fluchtende Ausrichtung der beiden z.B. aus Silizium bestehenden Trägerkörper und damit der Lichtleitfasern zu erreichen, müssen die am Trägerkörperrand zur Aufnahme der Führungsschiene dienenden V-förmigen Führungsnuten exakt geätzt sein.

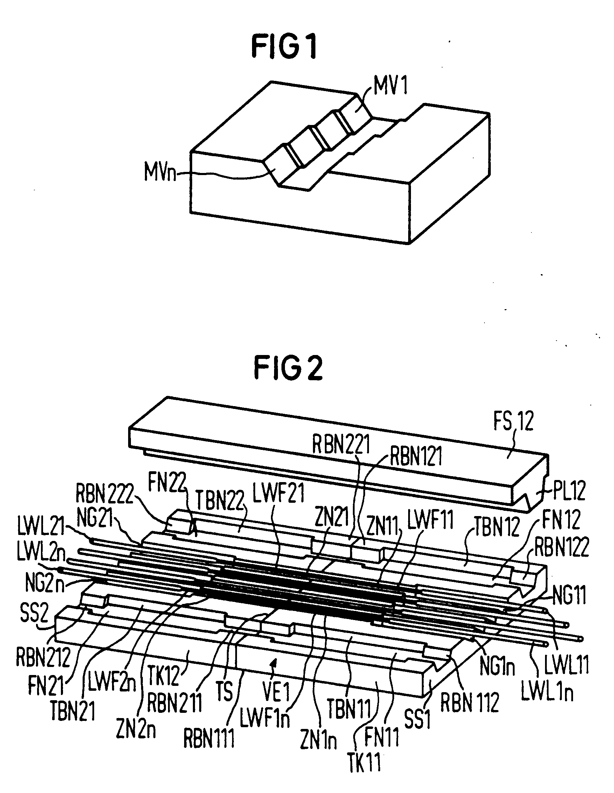

In der Fertigung tritt dabei das Problem auf, daß die Flanken der Führungsnuten des Trägerkörpers und der dazugehörigen Profilleisten der Silizium-Führungsschienen Mikroversetzungen MV1-MVn, wie Fig. 1 zeigt, nach dem Ätzen aufweisen. Dabei ergibt sich die Schwierigkeit, daß die Flanken von Führungsnut und Profilleisten nicht mehr großflächig aufliegen. Die Profilleisten richten somit die beiden Trägerkörper nicht mehr exakt zueinander aus, so daß sich die Grunddämpfung der Lichtleitfasern erhöht.

Desweiteren sind die durch Mikroversetzungen entstehenden undefinierten Punktauflagen zwischen der Führungsnut und den Profilleisten für eine Druck- und Temperaturempfindlichkeit im Dämpfungsverhalten des Siliziumverbindungselementes verantwortlich. Auch bewirken kleinste Staubpartikel in der Führungsnut oder in die Führungsnut eingedrungene Imersionsflüssigkeit zwischen den Siliziumflankenteilen ähnliche Effekte.

Der vorliegenden Erfindung liegt die Aufgabe zugrunde, den durch Mikroversetzungen beim Ätzen oder den durch Eindringen von kleinsten Fremdkörpern in den Führungsbereich auftretenden Problemen zu begegnen, um eine exakt fluchtende Ausrichtung der Lichtleitfasern zu ermöglichen.

Diese Aufgabe wird gemäß einer ersten Ausführungsform der Erfindung dadurch gelöst, daß die Führungsnuten jedes der Trägerkörper zumindest in einem Teilbereich derart verbreitert ausgebildet sind, daß in jedem Trägerkörper nicht verbreiterte Restbereiche der Führungsnuten verbleiben, und daß die dazugehörigen Profilleisten nur in den verbleibenden Restbereichen anliegen.

Dadurch, daß nur noch Restbereiche der Führungsnut des Trägerkörpers mit der Profilleiste der Führungsschiene eine Auflage bilden, führen Mikroversetzungen von Führungsnut und Profilleisten, sowie kleinste Staubpartikel in den Führungsnuten oder in die Führungsnuten eingedrungene Immersionsflüssigkeit weit weniger bzw. gar nicht zu einer Grunddämpfungserhöhung. Auf diese Weise wird eine außergewöhnlich große Genauigkeit in der Ausrichtung der einzelnen Verbindungsstellen erzielt, die auch durch äußere Einflüsse auf das Verbindungsteil, wie z.B. durch Druck oder Temperatur nicht beeinträchtigt wird.

Gemäß einer zweiten Ausführungsform der Erfindung werden die vorstehend genannten Vorteile bei einem Verbindungselement der eingangs genannten Art dadurch erreicht, daß die Profilleisten der Führungsschienen in mindestens zwei Teilbereichen so weit verkleinert oder ganz weggelassen sind, daß nur die verbleibenden Restbereiche der Profilleisten an den Führungsnuten der Trägerkörper anliegen und daß ein im Mittelbereich verbleibender Restbereich zur Ausrichtung beider Trägerkörper im Bereich beiderseits der Stoßstelle dient.

Weiterbildungen der Erfindung sind in Unteransprüchen wiedergegeben.

Die Erfindung und ihre Weiterbildungen werden nachfolgend anhand von Zeichnungen näher erläutert. Es zeigen:

Fig. 2     ein Verbindungselement gemäß einer ersten Ausführungsform der Erfindung in perspektivischer Darstellung,

Fig. 3     eine zweite Ausführungsform der Erfindung in perspektivischer Darstellung,

Fig. 4     eine Führungsschiene nach Fig. 3 in vergrößerter Darstellung,

Fig. 5     eine Abwandlung des Ausführungsbeispiels nach Fig. 3, und

Fig. 6     ein fertig montiertes Verbindungselement in perspektivischer Darstellung.

In Fig. 2 sind zwei Trägerkörper TK11 und TK12 eines mit VE1 bezeichneten Verbindungselementes mit einer dazugehörigen Führungsschiene FS12 gezeigt. Die zwei identischen Trägerkörper TK11 und TK12, die vorteilhaft aus ätzbarem Material, vorzugsweise Silizium, bestehen, stoßen mit ihren Stirnseiten an der gemeinsame Trennstelle TS aneinander. Im Mittelbereich der Trägerkörper TK11 und TK12 und quer zur Trennstelle TS sind parallel verlaufende Zentrierrillen ZN11-ZN1n und ZN21-ZN2n eingeätzt. Diese Zentrierrillen ZN11-ZN1n bzw. ZN21-ZN2n, die der Aufnahme und Zentrierung der entmantelten Lichtleitfasern LWF11-LWF1n bzw. LWF21-LWF2n dienen, gehen in den stirnseitigen Endbereichen SS1 bzw. SS2 in größer ausgebildete Nuten NG11-NG1n bzw. NG21-NG2n über, um die Lichtwellenleiter LWL11-LWL1n bzw.LWL21-LWL2n samt ihrer Umhüllung aufnehmen zu können. An den beiden seitlichen Rändern der Trägerkörper TK11 bzw. TK12 befinden sich eingeätzte, zu den Zentrierrillen ZN11-ZN12 bzw. ZN21-ZN2n parallel verlaufende fluchtende Führungsnuten FN11,FN12 bzw. FN21,FN22. Durch diese Führungsnuten FN11,FN12; FN21-FN22 erfolgt die Ausrichtung der beiden mit den Lichtleitfasern LWF11-LWF1n, LWF21-LWF2n bestückten Trägerkörper TK11 und TK12, indem in diese Führungsnuten z.B. FN12,FN22 Führungsschienen, z.B. FS12 mit angepaßten entsprechend vorspringenden Profilleisten, z.B. PL12 eingefügt werden. Eine in die Führungsnuten FN11,FN21 einzufügende Führungsschiene ist der übersichtlicheren Darstellung wegen nicht gezeigt. Diese Führungsschienen z.B. FS12 überbrücken die gemeinsame Trennstelle TS, so daß die Zentrierrillen ZN11-ZN1n und ZN21-ZN2n und damit die Lichtleitfasern LWF11-LWF1n und LWF21-LWF2n aufeinander fluchtend ausgerichtet werden. Die Führungsnuten FN11,FN12 bzw. FN21,FN22 eines jeden Trägerkörpers TK11 bzw. TK12 sind durch eine definierte Ätzung in zumindestens einem Teilbereich TBN11,TBN12 bzw. TBN21, TBN22, wie im vorliegenden Ausführungsbeispiel dargestellt, erweitert, so daß nur die verbleibenden zur eigentlichen Führung dienenden Restbereiche RBN111,RBN112; RBN121,RBN122 bzw. RBN211,RBN212; RBN221,RBN222 mit den Profilleisten z.B. PL12 der Führungsschienen z.B. FS12 eine Auflage bilden. Die der Auflage der Profilleisten z.B. PL12 dienenden Restbereiche RBN111-RBN222 der Führungsnuten FN11,FN12; FN21,FN22 sind zweckmäßigerweise von trapezförmigem Querschnitt und sind den Profilleisten z.B.PL12 der Führungsschienen z.B. FS12 so angepaßt, daß eine Berührung nur an den Seitenflächen der Profilleisten z.B. PL12 erfolgt. Durch die so erhaltene stark verringerte Auflagefläche der Profilleisten z.B. PL12 an den Restbereichen RBN111-RBN222 der Führungsnuten FN11,FN12; FN21, FN22 werden die eine nicht exakte Ausrichtung der Trägerkörper TK11 und TK12 hervorrufenden Einflüsse, wie sie durch Mikroversetzungen beim Ätzen, durch kleinste Staubpartikel oder durch eingedrungene Immersionsflüssigkeit in den Führungsnuten entstehen, weitgehend eleminiert.

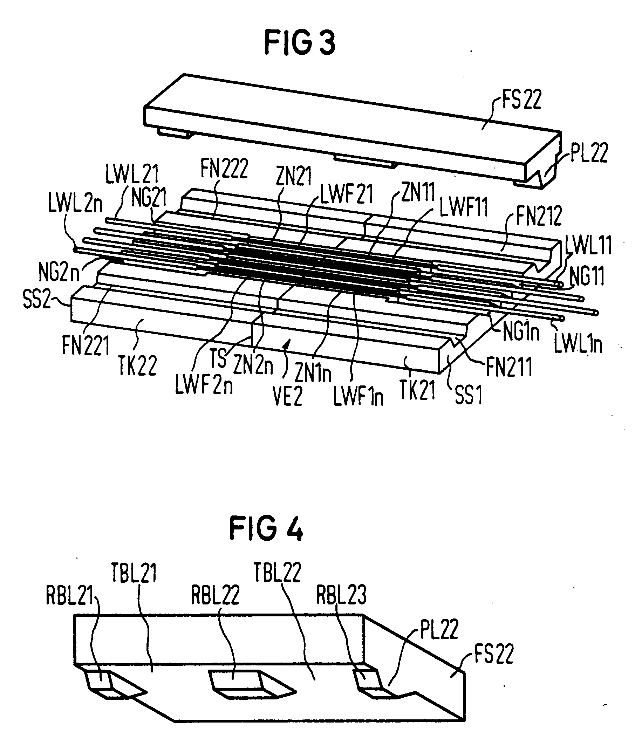

Eine andere vorteilhafte Ausführungsform eines mit VE2 bezeichneten Verbindungselementes ist in Fig. 3 dargestellt. Der Aufbau der beiden Trägerkörper TK21 und TK22 entspricht weitgehend dem der Anordnung nach Fig. 2, wobei gleiche Teile mit gleichen Bezugszeichen versehen sind. Der wesentliche Unterschied besteht jedoch darin, daß die Führungsnuten FN211, FN212 bzw. FN221,FN222 der beiden Trägerkörper TK21 bzw. TK22 keine erweiterten Teilbereiche aufweisen. Dagegen sind die in die Führungsnuten FN211,FN221 und FN212, FN222 einzufügenden Profilleisten z.B. PL22 der beiden Führungsschienen z.B. FS22 von denen zwecks übersichtlicherer Darstellung nur eine davon gezeichnet ist, nicht durchgehend ausgebildet sind (im Gegensatz zu der Anordnung nach Fig. 2).

Dabei besitzen, wie in Fig. 4 vergrößert und von unten gesehen dargestellt ist, die Profilleisten z.B. PL22 der Führungsschienen z.B. FS22 mindestens einen Teilbereich z.B. TBL21, TBL22, der durch Ätzung so weit verringert oder vollkommen beseitigt ist, so daß die Trägerkörper TK21 und TK22 nurmehr von den verbleibenden, an den Führungsnuten FN211,FN212; FN221,FN222 anliegenden Restbereichen z.B. RBL21,RBL22,RBL23 der Profilleisten z.B. PL22 geführt werden. Die der Auflage und Führung dienenden Restbereiche z.B. RBL11-RBL23 der Profilleisten z.B. PL22 befinden sich vorzugsweise an den Stirnseiten und in der Mitte der Führungsschienen z.B. FS22. Der im Mittelbereich verbleibende Restbereich RBL22 dient in erster Linie zur Ausrichtung der Trägerkörper TK21 und TK22 im Bereich beiderseits der Stoßstelle TS.

Werden beim Ausführungsbeispiel nach Fig. 3 die Führungsschienen z.B. FS22 in die Führungsnuten FN211,FN221 bzw. FN212, FN222 eingelegt, so erfolgt eine Ausrichtung der Trägerkörper TK21 und TK22 nur durch die Restbereiche z.B. RBL21-RBL23 der Profilleisten z.B. PL22. In den entfernten Teilbereichen z.B. TBL21,TBL22 der Profilleisten z.B. PL22 erfolgt keine Kontaktierung mit den Führungsnuten FN211-FN222, so daß Mikroversetzungen der Führungsnuten FN211-FN222, sowie in die Führungsnuten FN211-FN222 eingedrungene kleinste Staubpartikel oder Immersionsflüssigkeit eine exakte Ausrichtung der Trägerkörper TK21 und TK22 nicht beeinträchtigen.

Die Maßnahmen gemäß Fig. 2 (Verbreiterung der Führungsnut) und gemäß Fig. 3 (Aussparungen bei den Profilleisten) können auch gleichzeitig angewandt werden. Dabei müssen lediglich nicht verbreiterte Restbereiche der Nut (z.B. RBN111 bis RBN222) noch mit verbliebenen Restbereichen der Profilleisten (RBL21 bis RBL23) in Eingriff treten.

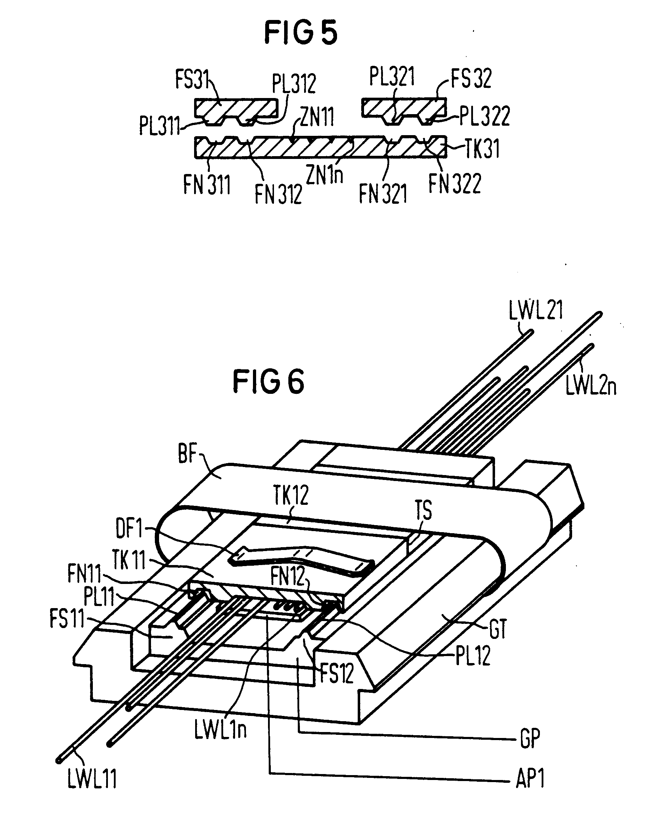

Es ist aber auch möglich, beidseitig zu den Zentrierrillen ZR11-ZR1n mehrere, parallel verlaufende Führungsnuten FN311,FN312 und FN321,FN322 vorzusehen, wie dies in Figur 5 für einen Trägerkörper TK31 dargestellt ist. Die in diese Führungsnuten FN311-FN322 eingreifenden, entsprechend angepaßten Profilleisten PL311,PL312 und PL321,PL322 sind jeweils an einer gemeinsamen Führungsschiene FS31 und FS32 angeordnet. Die Verbreiterungen der Führungsnuten (Fig. 2) bzw. Aussparungen der Profilleisten (Fig. 3) sind zur Vereinfachung der Darstellung weggelassen.

In Fig. 6 ist ein vollständig zusammengebautes Verbindungselement, der Ausführungsform nach

3

Fig. 2 dargestellt, wobei die dortige Oberseite nach unten gedreht ist. Die zwischen den Trägerkörpern TK11 bzw. TK12 und Abdeckplatten z.B. AP1 befindlichen Lichtwellenleiter LWL11-LWL1n bzw. LWL 21,LWL2n sind z.B. durch Klebematerial in ihrer Lage fixiert und stoßen mit ihren Stirnseiten an der Trennstelle TS aneinander. Die Abdeckplatten, z.B. AP1 bestehen vorzugsweise aus ätzbarem Material, z.B. Silizium, oder aus Glas. Durch die in die Führungsnuten z.B. FN11,FN12 der beiden Trägerkörper TK11 und TK12 eingreifenden Profilleisten PL11 und PL12 der Führungsschienen FS11 und FS12 erfolgt eine exakt fluchtende Ausrichtung der beiden Trägerkörper TK11 und TK12. Diese Führungsschienen FS11 und FS12 sind z.B. durch Epoxidharz an einer gemeinsamen Grundplatte GP fixiert. Vorzugsweise können die Führungsschienen FS11,FS12 und die Grundplatte GP, die vorteilhaft aus einem ätzbaren Material bestehen, auch eine untrennbare Einheit bilden, indem sie nach geeignetem Ätzverfahren aus einem einzigen Teilstück, beispielsweise Silizium, geätzt werden.

Der Fig. 6 kann man ferner entnehmen, wie die vorstehend erläuterte Anordnung aus Grundplatte GP, Führungsschienen FS11, FS12 und Trägerkörpern TK11,TK12 samt den Lichtwellenleitern LWL11-LWL1n, LWL21-LWL2n in einem passenden Grundteil GT eingebracht und fixiert wird. Ein derart verwendeter Grundteil GT ist vorzugsweise aus Metall beispielsweise Aluminium gefertigt. Zur Fixierung tragen die Trägerkörper TK11 und TK12 an ihrer Rückseite Druckfedern z.B. DF1, die in Verbindung mit der auf den Grundteil GT aufgeschobenen Bügelfeder BF eine gleichmäßige Fixierung der gesamten Anordnung erzielen.

**Patentansprüche**

1. Verbindungselement (VE1) für mehrere Lichtleitfasern mit Umhüllung, (LWL11-LWL1n; LWL21-LWL2n) bestehend aus zwei fluchtend angeordneten Trägerkörpern (TK11, TK12), die jeweils mehrere quer zu ihrer Trennstelle (TS) und untereinander parallel verlaufende V-förmige Zentrierrillen (ZR11-ZR1n; ZR21-ZR2n) zur Aufnahme einzelner entmantelter Lichtleitfasern (LWF11-LWF1n; LWF21-LWF2n) und beiderseits der Zentrierrillen (ZR11-ZR1n; ZR21-ZR2n) jeweils Führungsnuten (FN11, FN12; FN21, FN22) aufweisen, in denen entsprechend angepaßte, beide Trägerkörper (TK11, TK12) überdeckende Profilleisten (PL12) von Führungsschienen (FS12) eingreifen, **dadurch gekennzeichnet,** daß die Führungsnuten (FN11, FN12; FN21, FN22) jedes der Trägerkörper (TK11, TK12) in zumindest einem Teilbereich (TBN11, TBN121; TBN21, TBN22) derart verbreitert ausgebildet sind, daß in jedem Trägerkörper (TK11, TK12) nicht verbreiterte Restbereiche der Führungsnuten (RBN111, RBN112; RBN121, RBN122 bzw. RBN211, RBN212; RBN221, RBN222) verbleiben, und daß die dazugehörigen Profilleisten (PL12) nur in den verbleibenden Restbereichen (RBN111, RBN112; RBN121, RBN122 bzw. RBN211, RBN212; RBN221, RBN222) anliegen.

2. Verbindungselement nach Anspruch 1, **dadurch gekennzeichnet,** daß die zur Führung dienenden Restbereiche (RBN111-RBN222) der Führungsnutgen (FN11, FN12; FN21, FN22) insbesondere an den Stirnseiten (SS1, SS2) und beiderseits der Trennstelle (TS) der Trägerkörper (TK11, TK12) vorgesehen sind.

3. Verbindungselement (VE2) für mehrere Lichtleitfasern mit Umhüllung, (LWL11-LWL1n; LWL21-LWL2n) bestehend aus zwei fluchtend angeordneten Trägerkörpern (TK21, TK22), die jeweils mehrere quer zu ihrer Trennstelle (TS) parallel verlaufende V-förmige Zentrierrillen (ZR11-ZR1n; ZR21-ZR2n) zur Aufnahme einzelner entmantelter Lichtleitfasern (LWF11-LWF1n; LWF21-LWF2n) und beiderseits der Zentrierrillen (ZR11-ZR1n; ZR21-ZR2n) jeweils Führungsnuten (FN211, FN212; FN221, FN222) aufweisen, in denen entsprechend angepaßte, beide Trägerkörper (TK21, TK22) überdeckende Profilleisten (PL22) von Führungsschienen (FS2) eingreifen, **dadurch gekennzeichnet,** daß die Profilleisten (PL22) der Führungsschienen (FS22) in mindestens zwei Teilbereichen (TL21, TBL22) so weit verkleinert oder ganz weggelassen sind, daß nur die verbleibenden Restbereiche (RBL21, RBL22, RBL23) der Profilleisten (PL22) an den Führungsnuten (FN211, FN212; FN221, FN222) der Trägerkörper (TK21, TK22) anliegen und daß ein im Mittelbereich verbleibender Restbereich (RBL22) zur Ausrichtung beider Trägerkörper (TK21, TK22) im Bereich beiderseits der Stoßstelle (TS) dient.

4. Verbindungselement nach Anspruch 3, **dadurch gekennzeichnet,** daß die zur Führung dienenden Restbereiche (RBL21,RBL22,RBL23) der Profilleisten (PL22) an den Stirnseiten (SS1,SS2) und beiderseits der Trennstelle (TS) der Trägerkörper (TK21,TK22) vorgesehen sind.

5. Verbindungselement nach einem der vorhergehenden Ansprüche,

**dadurch gekennzeichnet,**
daß mehrere Führungsnuten (FN311,FN312; FN321,FN322) beiderseits der Zentrierrillen (ZR11-ZR1n) vorgesehen sind und die dazugehörigen Profilleisten (PL311,PL312; PL321,PL322) nebeneinander verlaufend angeordnet sind.

6. Verbindungselement nach Anspruch 5,
**dadurch gekennzeichnet,**
daß die beiderseits der Zentrierrillen (ZR11-ZR1n) in vorgesehene Führungnuten (FN311,FN322) eingreifenden Profilleisten (PL311,PL322) je an einer gemeinsamen Führungsschiene (FS31,FS32) angeordnet sind.

7. Verbindungselement nach einem der vorhergehenden Ansprüche,
**dadurch gekennzeichnet,**
daß die Führungsschienen (FS11,FS12) durch Klebemittel, vorzugsweise Epoxidharz, an einer gemeinsamen Grundplatte (GP) befestigt sind.

8. Verbindungselement nach einem der Ansprüche 1 - 6,
**dadurch gekennzeichnet,**
daß die Führungsschienen (FS11,FS12) und die Grundplatte (GP) als ein gemeinsames Teil ausgebildet sind.

## Claims

1. Connecting element (VE1) for a plurality of optical fibres with a sheath (LWL11-LWL1n; LWL21-LWL2n) comprising two supporting bodies (TK11, TK12), which are aligned flush and in each case have a plurality of V-shaped centring grooves (ZR11-ZR1n; ZR21-ZR2n), which run at right angles to their separating point (TS) and are mutually parallel, for holding individual unsheathed optical fibres (LWF11-LWF1n; LWF21-LWF2n) and, on both sides of the centring grooves (ZR11-ZR1n; ZR21-ZR2n) in each case guide grooves (FN11, FN12; FN21, FN22), in which correspondingly matched profiled strips (PL12), covering both supporting bodies (TK11, TK12), of guide rails (FS12) engage, characterised in that the guide grooves (FN11, FN12; FN21, FN22) of each of the supporting bodies (TK11, TK12) are constructed broadened in at least one subregion (TBN11, TBN121; TBN21, TBN22) in such a manner that there remain in each supporting body (TK11, TK12) non-broadened residual regions of the guide grooves (RBN111, RBN112; RBN121, RBN122 and RBN211, RBN212; RBN221, RBN222 respectively), and in that the associated profiled strips (PL12) abut only in the remaining residual regions (RBN111, RBN112; RBN121, RBN122 and RBN211, RBN212; RBN221, RBN222 respectively).

2. Connecting element according to Claim 1, characterised in that the residual regions (RBN111-RBN222), which are used for guidance, of the guide grooves (FN11, FN12; FN21, FN22) are provided especially on the end sides (SS1, SS2) and on both sides of the separating point (TS) of the supporting bodies (TK11, TK12).

3. Connecting element (VE2) for a plurality of optical fibres with a sheath (LWL11-LWL1n; LWL21-LWL2n) comprising two supporting bodies (TK21, TK22) which are aligned flush and in each case have a plurality of V-shaped centring grooves (ZR11-ZR1n; ZR21-ZR2n), which run parallel at right angles to their separating point (TS), for holding individual non-sheathed optical fibres (LWF11-LWF1n; LWF21-LWF2n) and guide grooves (FN211, FN212; FN221, FN222), in each case on both sides of the centring grooves (ZR11-ZR1n; ZR21-ZR2n), in which correspondingly matched profiled strips (PL22), covering both supporting bodies (TK21, TK22), of guide rails (FS2) engage, characterised in that the profiled strips (PL22) of the guide rails (FS22) are reduced in size or completely omitted in at least two subregions (TL21, TBL22) to the extent that only the remaining residual regions (RBL21, RBL22, RBL23) of the profiled strips (PL22) rest on the guide grooves (FN211, FN212; FN221, FN222) of the supporting bodies (TK21, TK22), and in that a residual region (RBL22) remaining in the central region is used for alignment of both supporting bodies (TK21, TK22) in the region on both sides of the abutment point (TS).

4. Connecting element according to Claim 3, characterised in that the residual regions (RBL21, RBL22, RBL23), used for guidance, of the profiled strips (PL22) are provided on the end sides (SS1, SS2) and on both sides of the separating point (TS) of the supporting bodies (TK21, TK22).

5. Connecting element according to one of the preceding claims, characterised in that a plurality of guide grooves (FN311, FN312; FN321, FN322) are provided on both sides of the centring grooves (ZR11-ZR1n), and the associated profiled strips (PL311, PL312; PL321, PL322) are arranged running side-by-side.

**6.** Connecting element according to Claim 5, characterised in that the profiled strips (PL311, PL322) which engage on both sides of the centring grooves (ZR11-ZR1n) in guide grooves (FN311, FN322) which are provided, are arranged in each case on a common guide rail (FS31, FS32).

**7.** Connecting element according to one of the preceding claims, characterised in that the guide rails (FS11, FS12) are secured by adhesive agents, preferably epoxy resin, on a common baseplate (GP).

**8.** Connecting element according to one of Claims 1-6, characterised in that the guide rails (FS11, FS12) and the baseplate (GP) are constructed as a common part.

**Revendications**

**1.** Élément de raccordement (VE1) pour plusieurs guides d'ondes optiques (LWL11-LWL1n; LWL21-LWL2n) plusieurs d'une gaine, constitué par deux corps de support (TK11, TK12) alignés, qui possèdent respectivement plusieurs gorges de centrage en forme de V (ZR11-ZR1n; ZR21-ZR2n), qui s'étendent transversalement par rapport au point de séparation (TS) de ces corps et sont parallèles entre elles et servent à loger des fibres optiques individuelles sans gaine (LWF11-LWF1n; LWF21-LWF2n), et possèdent, des deux côtés des gorges de centrage (ZR11-ZR1n; ZR21-ZR2n), respectivement des rainures de guidage (FN11, FN12; FN21, FN22), dans lesquelles s'engagent des barrettes profilées (PL12), qui sont adaptées de façon correspondante et qui recouvrent les deux corps de support (TK11, TK12), de rails de guidage (FS12), caractérisé par le fait que les rainures de guidage (FN11; FN12; FN21, FN22) de chacun des corps de support (TK11, TK12) sont élargies au moins dans une zone partielle (TBN11, TBN12; TBN21, TBN22) de sorte qu'il subsiste, dans chaque corps de support (TK11, TK12), des zones résiduelles non élargies (RBN111, RBN112; RBN121, RBN122 ou RBN211, RBN212; RBN221, RBN222) des rainures de guidage, et que les barrettes profilées (PL12), qui sont associées, s'appliquent seulement dans les zones restantes (RBN111, RBN112; RBN121, RBN122 ou RBN211, RBN212; RBN221, RBN222).

**2.** Élément de raccordement suivant la revendication 1, caractérisé par le fait que les zones restantes (RBN111-RBN222), utilisées pour le guidage, des rainures de guidage (FN11, FN12; FN21, FN22) sont prévues notamment sur les faces frontales (SS1, SS2) et des deux côtés du point de séparation (TS) des corps de support (TK11, TK12).

**3.** Élément de raccordement (VE2) pour plusieurs guides d'ondes optiques (LWL11-LWL1n; LWL21-LWL2n) équipés d'une gaine, constitué par deux corps de support (TK21, TK22) alignés, qui possèdent respectivement plusieurs rainures de centrage parallèles en forme de V (ZR11-ZR1n; ZR21-ZR2n), qui s'étendent transversalement par rapport au point de séparation (TS) de ces corps et servent à loger des fibres optiques individuelles sans gaine (LWF11-LWF1n; LWF21-LWF2n), et possèdent, des deux côtés des gorges de centrage (ZR11-ZR1n; ZR21-ZR2n), respectivement des rainures de guidage (FN211, FN212; FN221, FN222), dans lesquelles s'engagent des barrettes profilées (PL22), qui sont adaptées de façon correspondante et recouvrent les deux corps de support (TK11, TK12), de rails de guidage (FS12), caractérisé par le fait que les barrettes profilées (PL22) des rails de guidage (FS22) sont réduites ou totalement supprimées, au moins dans deux zones partielles (TL21, TBL22) de sorte que seules les zones restantes (RBL21, RBL22, RBL23) des barrettes profilées (PL22) s'appliquent contre les rainures de guidage (FN211, FN212; FN221, FN222) des corps de support (TK21, TK22) et qu'une zone restante (RBL22), qui subsiste dans la zone médiane, sert à aligner les deux corps de support (TK21, TK22) dans la zone située des deux côtés du point d'aboutement (TS).

**4.** Élément de raccordement suivant la revendication 3, caractérisé par le fait que les zones restantes (RBL21, RBL22, RBL23), utilisées pour le guidage, des barrettes profilées (PL22) sont prévues sur les faces frontales (SS1, SS2) et des deux côtés du point de séparation (TS) des corps de support (TK21, TK22).

**5.** Élément- de raccordement suivant l'une des revendications précédentes, caractérisé par le fait que plusieurs rainures de guidage (FN311, FN312; FN321, FN322) sont prévues des deux côtés des gorges de centrage (ZR11-ZR1n) et que les barrettes profilées (PL311, PL312; PL321, PL322), qui y sont associées, sont disposées côte-à-côte.

**6.** Élément de raccordement suivant la revendication 5, caractérisé par le fait que les barrettes profilées (PL311, PL322), qui s'engagent des deux côtés des gorges de centrage (ZR11-ZR1n) dans des rainures de guidage prévues (FN311, FN322), sont disposées sur des rails respectifs communs de guidage (FS31, FS32).

7. Élément de raccordement suivant l'une des revendications précédentes, caractérisé par le fait que les rails de guidage (FS11, FS12) sont fixés au moyen d'un adhésif, de préférence une résine époxy, sur une plaque de base commune (GP).

8. Élément de raccordement suivant l'une des revendications 1-6, caractérisé par le fait que les rails de guidage (FS11, FS12) et la plaque de base (GP) sont réalisés sous la forme d'un élément commun.

# FIG 1

MV1

MVn

# FIG 2

FS 12

RBN221  RBN121

PL12

RBN222  FN22  TBN22  LWF21  ZN21  ZN11  LWF11  TBN12  FN12

LWL21  NG21

LWL2n

RBN122

NG2n

NG11

SS2

RBN212

FN21  LWF2n  TK12  TS  VE1  TBN11  SS1  RBN112  NG1n  LWL11

TBN21  RBN211  ZN1n  FN11  LWL1n

ZN2n  RBN111  LWF1n  TK11

## FIG 3

## FIG 4

# FIG 5

# FIG 6